Europäisches Patentamt

**European Patent Office**

Office européen des brevets

(11) Publication number: **0 004 797**
**A2**

## EUROPEAN PATENT APPLICATION

(21) Application number: **79300620.6**

(22) Date of filing: **12.04.79**

(51) Int. Cl.²: **G 06 F 3/14**
**G 06 K 15/20, G 09 F 9/00**

(30) Priority: **12.04.78 GB 1440078**

(43) Date of publication of application:
**17.10.79 Bulletin 79/21**

(84) Designated Contracting States:
**BE DE FR NL**

(71) Applicant: **DATA RECALL LIMITED**
**Sondes Place**
**Dorking Surrey RH4 3EF(GB)**

(72) Inventor: **Jones, Mark-Eric**
**C/O. Data Recall Limited Sondes Place**
**Dorking Surrey RH4 3EF(GB)**

(74) Representative: **Jackson, David Spence et al,**
**REDDIE & GROSE 16, Theobalds Road**
**London, WC1X 8PL(GB)**

(54) **Video display control apparatus.**

(57) Video display control apparatus for a visual display device 11 employing a television-type raster in a word processor has a display memory 13, a column counter 25 and a row counter 28 adapted to address the display memory 13. Each location of the display memory 13 has a address comprising a column number and a row number. A clock oscillator 18 and a timing chain 19 produce raster timing signals and column and row timing signals. The count in the column counter 25 tracks the line being scanned, and the count in the row counter tracks successive groups of lines in the raster. The display data output of the display memory 13 control a character matrix memory 15 acting through a parallel-to-serial converter 16 to cause alphanumeric characters to be displayed in rows by the display device. So that the information display by the device 11 can be varied in a convenient manner, the row counter 28 is coupled to the display memory 13 through a random access memory 30 which stores information from a central processor unit 14. This stored information determines which set of sequential row addresses shall be supplied to the display memory 13 as the row counter 28 carries out its counting sequence, and includes an instruction associated with a selected row address which causes a reset signal to be supplied to the column counter 25 so that for this row the characters displayed start at the character stored in the first column of locations in the display memory 13, the column addresses generated by the column counter 25 being otherwise selectable as any set formed by a predetermined number of consequetive column addresses for alphanumeric character locations in the display memory 13.

·/· · ·

FIG.2

- 1 -

VIDEO DISPLAY CONTROL APPARATUS

This invention relates to video display control apparatus for use with a visual display device employing a television-type scanning raster.

Visual display devices are now employed in monitoring or simply displaying information constituting the output of, for example, a computing system, a commercial information disseminating network, or a word processor. At present, such display devices are usually in the form of a cathode ray tube operated with a television-type scanning raster. It is frequently the case that the quantity of data stored in the system supplying the visual display device is greater than the amount that can be displayed simultaneously.

An object of the present invention is to provide control apparatus enabling a visual display device to vary the information display thereby in a convenient manner.

According to the present invention, therefore, there is provided video display control apparatus for use with a visual display device employing a television-type scanning raster, the control apparatus including a display memory, a column counter and a row counter adapted to address the display memory, each of a plurality of locations of the display memory having an address comprising a column number and a row number, timing means for producing raster timing signals and column and row timing signals, the timing means being so coupled to the column counter and the row counter that, in operation, the count in the column counter changes in a manner representative of the scanning of a line of the raster and the count in the row counter changes in a manner representative of the succession of lines in the raster, and means coupled to data output terminals of the display memory for producing display signals representative of display data held in addressed locations of the said plurality of locations, characterised in that the row counter is coupled to the

0004797

display memory through a random access memory adapted to store a row holding instruction relating to a selected row address and to supply to the column counter a row holding signal such that the column counter in response thereto carries out its column counting or countings for the selected row address through a predetermined series of column numbers, the column counter being adapted to count a predetermined number of column numbers starting from a column number which is selectable except in the presence of the row holding instruction.

Since the count in the column counter changes in a manner representative of the scanning of a line of the raster and the count in the row counter changes in a manner representative of the succession of lines in the raster, and the column and row timing signals are such that the count in the column counter changes faster than the count in the row counter. Although the terms column and row are thus associated with the scanning of a line of the raster and the succession of lines in the raster respectively, the lines of the raster in the display in operation may be so orientated as to run from top to bottom of the display as viewed by a user. Normally, however, the lines will be orientated so as to run from left to right in the display.

Preferred features of the apparatus are defined in the sub-claims appended hereafter.

The invention will now be described in more detail, solely by way of example, with reference to the accompanying drawings, in which:-

Fig. 1 is a block diagram of a word processor embodying the invention; and

Fig. 2 is a block diagram showing in more detail part of the embodiment of Fig. 1.

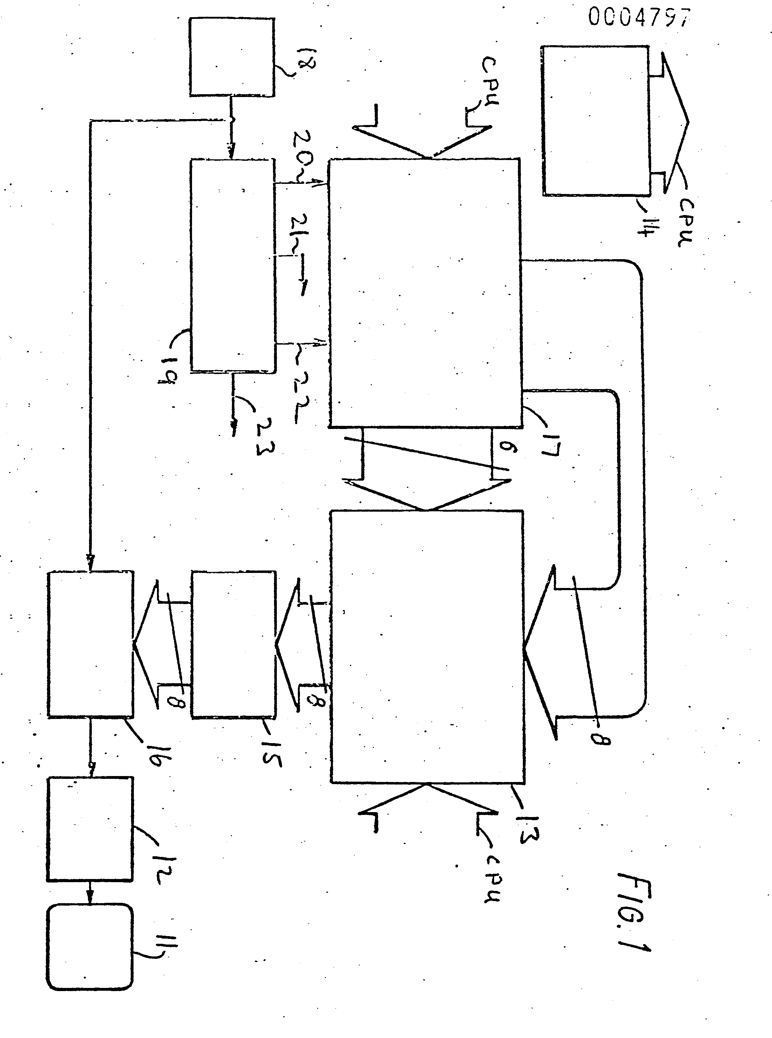

In the word processor of Fig. 1, a cathode ray display tube 11 receives a video signal from a video output stage 12. Scanning circuitry for the cathode ray display tube 11 is not shown and produces a scanning raster on the screen of the tube 11, the scanning raster being formed by a large number of horizontal lines. The scanning of the raster is similar to that of a television raster except that there is no interlacing of the lines. The lines in the scan making up each frame of the raster are produced in sequence starting at the top of the frame. A display memory 13 stores alphanumeric character codes in a plurality of locations arranged to represent, for example, an array of 128 columns by 64 rows. The character codes are supplied to the display memory 13 by a central processor unit 14 which receives this information from a

0004797

flexible disc, not shown, or a keyboard, not shown.

Whenever one of the locations containing a character code in the display memory is addressed, the character code is supplied to a character matrix memory 15 which stores a character scan dot code for each possible alphanumeric character. In the present example, each alphanumeric character is formed by a selection of dots from a matrix of 10 by 13 dot positions, each matrix being 13 dots high and 10 dots wide. Consequently, 13 line scans are required to scan each complete character. Thus one row consists of 13 horizontal successive lines of dots, in coded form, supplied by the matrix memory 15 to a parallel-to-serial converter 16 in the form of a 10 bit shift register. The serial output of this converter is supplied to the video output stage 12 which correspondingly supplies video dot signals to the cathode ray display tube 11.

The display memory 13 is addressed by an addressing unit 17 which produces the address for each of the alphanumeric character locations of the display memory in the form of a 6 bit row address combined with an 8 bit column address. In effect, a selected succession of 80 column addresses is supplied 13 times to the display memory 13 during the supplying of each row address to the display memory 13. Consequently, each of the 13 horizontal lines of dots in coded form supplied to the converter 16 consists of 80 groups of dots, each group lying in a respective column and being a selection of the dots forming the character at the location defined by the respective column and the current row.

Timing signals, in the form of pulses, are generated as follows.

A clock oscillator 18 generates clock pulses at, for example, 50 megahertz. The clock pulses are supplied directly to the shift register constituting the converter 16 and thus the dot rate is set at the frequency of the clock oscillator 18. The clock pulses are also supplied directly to a timing chain 19 which consists of a chain of frequency dividers (not shown). Four outputs 20, 21, 22 and 23 from the timing chain 19 are shown. Streams of pulses at successively lower rates are supplied at these outputs 20 to 23. The highest pulse rate, which is at the output 20, is supplied to the addressing unit 17 to determine the rate at which column addresses are generated. This rate is accordingly the character clock rate and may be, for example, 5 megahertz. The pulses supplied at the output 21 are generated at a rate which is used as the line frequency for the raster of the cathode ray display tube 11. Each pulse at the output 21 is very short and corresponds substantially to a line sync pulse. The rate of the pulses at the output 22 is

- 4 -

0004797

1/13th that of the pulses at the output 21. The pulses at the output 22 are supplied to the addressing unit 17 where they serve to determine the row address rate. The rate of the pulses at the output 23 is 1/68th of the rate of the pulses at the output 22. The pulses at the output 23 are accordingly used as frame sync pulses, i.e. the pulses which determine the instants at which rasters on the cathode ray display tube 11 are completed.

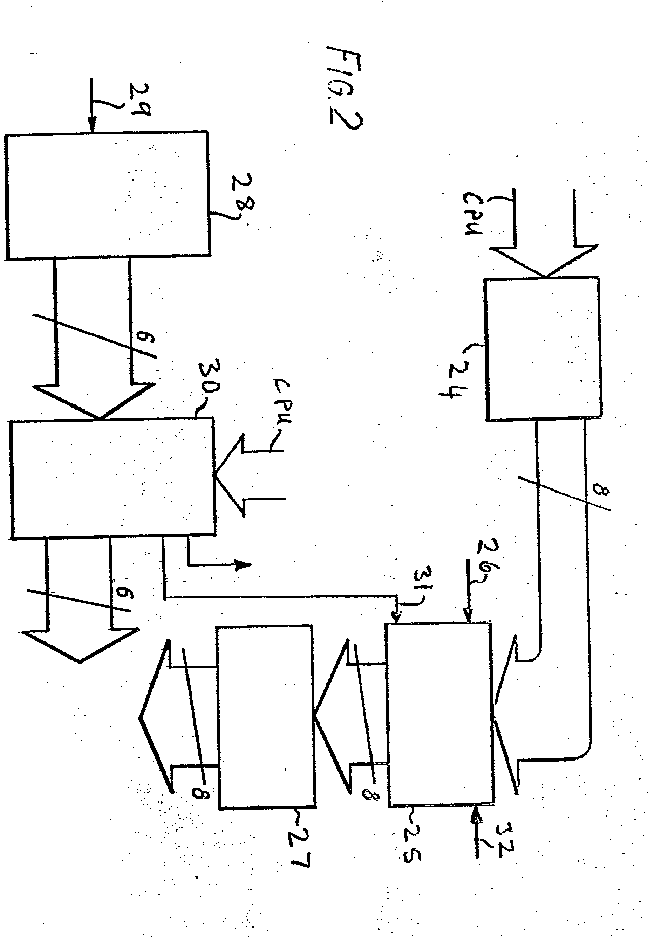

The central processor unit 14 supplies to the addressing unit 17 information which determines which succession of 80 of the 128 columns is to be addressed by the addressing unit, and which one of the 64 rows is to serve as the starting row during addressing by the addressing unit. This facility enables the cathode ray display tube 11 to display the information contained in any array of 80 columns by 64 rows selected from the array of 128 columns by 64 rows representing the stored alphanumeric characters in the display memory 13. For example, if the array represented by the locations in the display memory 13 is considered to consist of columns 1 to 128 numbered from the left and rows 1 to 64 numbered from the top, the addressed array may consist of columns 21 to 100 by rows 10 to 64 followed by rows 1 to 9. Furthermore, the information supplied to the addressing unit 17 by the central processor unit 14 can include an instruction for a selected row of the addressed array to consist of the locations in columns 1 to 80 of that row while the other rows consist of the locations in another succession of 80 columns, for example, columns 21 to 100. The means whereby this latter operation is carried out will now be described with reference to Fig. 2.

In Fig. 2, the addressing unit 17 is shown to consist of a roll left right offset latch 24 which holds the current value of the left hand column to be displayed, this value being supplied to the latch by the central processor unit, a column counter 25 coupled to the latch 24 to receive therefrom an 8 bit output representing the left hand column value held by the latch 24, and receiving at an input 26 the character rate pulses supplied by the output 20 of the timing chain 19, a buffer 26 coupled to the 8 bit output of the counter 25 and having an 8 bit output at which the column addresses supplied to the display memory 13 appear in operation, a row counter 28 which receives at an input 29 the row rate pulses provided at the output 22 of the timing chain 19, and a random access memory 30 coupled to the row counter 28 to receive therefrom a 6 bit output, and having an 8 bit output of which 6 bits are supplied to the display memory 13 as the row addresses, the 7th bit of the output being supplied to a

- 5 -

0004797

reset input 31 of the column counter 25 and the 8th bit of the output being supplied to the display memory as a blanking signal to force the main memory to provide no alphanumeric character as output during the active time of the signal on the 8th bit of the output of the random access memory 30. The random access memory 30 also receives an input from the central processor unit which determines the prevailing relationship between the 6 bit output of the row counter 28 and the first 6 bits of the output of the random access memory 30 which are supplied as row addresses to the display memory 13. The input to the random access memory 30 from the central processor unit also determines for each row address generated by the random access memory 30 the accompanying values of the 7th and 8th bits of the output of the random access memory. In particular, the value of the 7th bit for each row address is either high or low, and in response to one of these values, the column counter 25 is reset to zero. The column counter 25 is arranged to count a succession of 112 column numbers starting from the number of the left hand column supplied to it by the latch 25 unless the counter 25 is reset to zero in which case the count of 112 successive column numbers is started at zero. Consequently, in the display on the cathode ray display tube 11, rows of alphanumeric characters are presented which start at the left hand end with the character in the left hand column determined by the value supplied to the counter 25 by the latch 24 when for the row address supplied to the display memory 13 by the random access memory 30 the 7th bit of the output of the random access memory 30 is not such as to reset the column counter 25. However, when the 7th bit of the output of the random access memory 30 accompanying the row address supplied to the display memory 13 is such as to reset the column counter 25, the corresponding row of alphanumeric characters displayed by the cathode ray display tube 11 starts at its left hand end with the character occurring in the first column of locations in the display memory 13 for that row. Line fly-back blanking pulses are supplied to another input 32 of the column counter 25 to set the counter 25 to the start of each cycle of counting each blanking pulse occurring during the last 32 counts. In the present example, the column counter 25 is capable of counting from 0 to 255. It will be realized that the selection of the left hand column by means of the left hand column number supplied by the latch 24 to the counter 25 enables that area of the array of locations containing alphanumeric characters in the display memory 13 which is to be displayed by the cathode ray display tube 11 to be shifted to the left and

to the right.   Such shifting is referred to as rolling.   The fixing of a particular row to the first 80 columns by the 7th bit of an output from the random access memory 30 enables rows thus selected to be held in the display on the cathode ray display tube 11 while the other rows are rolled to the left or to the right.·   This facility is particularly useful in the case of rows constituting headings for information appearing in the display.

The row counter 28 is such as to count from 0 to 67 and supplies its count in coded form as the 6 bit output to the random access memory 30.   In a manner determined by the instructions received by the random access memory 30 from the central processor unit, the random access memory 30 translates the count of the row counter 28 into an 8 bit output signal in which the first 6 bits constitutes a row address, the 7th bit constitutes the signal to be supplied to the reset input 31 of the column counter, and the 8th bit constitutes a signal to the display memory 13 instructing that memory 13 to either provide the contents of the addressed locations or to provide a blank output signal.

The counting operation carried out by the row counter 28 is synchronised with the raster of the cathode ray display tube 11 so that the counts 64, 65, 66, and 67 occur during the frame fly-back blanking time.   This locking of the counting cycle of the counter 28 to the raster timing ensures that rows of characters are automatically placed in the desired positions in the displayed array.

The random access memory 30 may be a Motorola MCM6810AL which has a capacity of a 128 times 8 bits.   The display memory 13 may be formed of 32 Texas Instruments TMS4044-15, each being a 4K by 1 bit static random access memory.   The character matrix memory 15 may be formed of 8 Texas Instruments TMS4044-15.

0004797

## CLAIMS

1.      Video display control apparatus for use with a visual display device employing a television-type scanning raster, the control apparatus including a display memory, a column counter and a row counter adapted to address the display memory, each of a plurality of locations of the display memory having an address comprising a column number and a row number, timing means for producing raster timing signals and column and row timing signals, the timing means being so coupled to the column counter and the row counter that, in operation, the count in the column counter changes in a manner representative of the scanning of a line of the raster and the count in the row counter changes in a manner representative of the succession of lines in the raster, and means coupled to data output terminals of the display memory for producing display signals representative of display data held in addressed locations of the said plurality of locations, characterised in that the row counter (28) is coupled to the display memory (13) through a random access memory (30) adapted to store a row holding instruction relating to a selected row address and to supply to the column counter (25) a row holding signal such that the column counter (25) in response thereto carries out its column counting or countings for the selected row address through a predetermined series of column numbers, the column counter being adapted to count a predetermined number of column numbers starting from a column number which is selectable except in the presence of the row holding instruction.

2.      Apparatus according to claim 1, wherein a latch (24) for storing a selected column number is coupled to the column counter (25), and the column counter (25) is adapted to effect counting of a predetermined number of column numbers starting from the column number stored in the latch (24) except in the presence of the row holding instruction.

3.      Apparatus according to claim 1 or 2, characterised in that the column counter (25) has a reset input terminal (31), the random access memory (30) is so coupled to the column counter (25) as to supply row holding instructions to the reset input terminal (31), and the column counter (25) is such as to reset to the count zero whenever a row holding instruction is present at the reset input terminal (31).

4.      Apparatus according to claim 3, characterised in that the random access memory (30) is adapted to encode the count in the row counter (28) as a different count related thereto by a constant which is selectable.

5.    Apparatus according to claim 4, wherein the said locations of the display memory (13) are filled by a central processor unit (14) which is arranged to supply the column number to be stored to the said latch (24), and to supply the instructions to the random access memory (30) which determine the said constant and determine the said selected row address.

0004797

FIG.1

FIG. 2